(19) Europäisches Patentamt
European Patent Office
Office européen des brevets

(11) **EP 3 135 112 A1**

(12) **EUROPÄISCHE PATENTANMELDUNG**

(43) Veröffentlichungstag:
**01.03.2017  Patentblatt 2017/09**

(51) Int Cl.:
*A01N 37/34* *(2006.01)*      *A01N 37/06* *(2006.01)*
*A01N 37/10* *(2006.01)*      *A01N 37/36* *(2006.01)*
*A01N 37/40* *(2006.01)*      *A01N 65/00* *(2009.01)*
*A01P 1/00* *(2006.01)*

(21) Anmeldenummer: **15182206.1**

(22) Anmeldetag: **24.08.2015**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA**

(71) Anmelder: **LANXESS Deutschland GmbH
50569 Köln (DE)**

(72) Erfinder:
• **Die Erfinder haben auf ihr Recht verzichtet, als
solche bekannt gemacht zu werden.**

(54) **ZUSAMMENSETZUNG ENTHALTEND 1,2-DIBROM-2,4-DICYANOBUTAN (DBDCB) UND
WENIGSTENS EINE ORGANISCHE SÄURE UND/ODER DEREN DERIVATE**

(57)   Zusammensetzung, dadurch gekennzeichnet, dass sie 1,2-Dibrom-2,4-dicyanobutan (DBDCB) und wenigstens eine organische Säure und/oder deren Derivate enthält.

EP 3 135 112 A1

**Beschreibung**

Gegenstand der vorliegenden Anmeldung sind Zusammensetzungen enthaltend 1,2-Dibrom-2,4-dicyanobutan (DBDCB) und wenigstens eine organische Säure und/oder deren Derivate, Verfahren zur Herstellung der erfindungsgemäßen Zusammensetzungen und deren Verwendung zum Schutz technischer Materialien vor Befall und Zerstörung durch Mikroorganismen sowie technische Materialien enthaltend die erfindungsgemäßen Zusammensetzungen.

1,2-Dibrom-2,4-dicyanobutan (DBDCB, "Tektamer 38") ist ein seit langem in der Praxis verwendeter biozider Wirkstoff zur Herstellung antimikrobiell wirksamer Formulierungen zur Bekämpfung von materialzerstörenden Bakterien, Pilzen oder Hefen vor allem in technischen Zubereitungen. Dieser Wirkstoff verfügt grundsätzlich über eine breite antimikrobielle Wirkung gegen Mikroorganismen wie Bakterien, Pilze oder Hefen und zeichnet sich vorteilhaft durch eine gute Verträglichkeit in vielen zu schützenden Produkten aus. Allerdings ist die Wirksamkeit in manchen Anwendungen aufgrund der relativ hohen Lipophilie von DBDCB nicht immer zufriedenstellend. Daher sind in solchen Fällen zur Erzielung einer guten Konservierung Einsatzkonzentrationen erforderlich, die wiederum aufgrund des in höheren Konzentrationen sensibilisierenden Potentials von DBDCB in bestimmten Anwendungen aus z.B. Hautverträglichkeitsgründen zu hoch sind. Somit besteht ein Bedürfnis danach, die breite antimikrobielle Wirksamkeit von DBDCB auch bei Einsatz von geringeren Mengen nutzen zu können.

Eine weitere Klasse von Biozidwirkstoffen mit einer guten antimikrobiellen Wirksamkeit gegen materialzerstörende Bakterien, Schimmelpilze und Hefen sind organische Säuren wie z.B. Benzoesäure, Milchsäure, Salicylsäure, Sorbinsäure oder Zitronensäure sowie jeweils deren Derivate, welche vor allem in der Kosmetikindustrie eingesetzt werden. Solche organischen Säuren verfügen allerdings über eine im Vergleich zu den standardmäßig in der technischen Konservierung eingesetzten Bioziden schwächere antimikrobielle Wirksamkeit und müssen daher, sofern als Einzelprodukt verwendet, in Mengen eingesetzt werden, die in den zu schützenden Produkten zu ungewollten Eigenschaftsänderungen führen können (z.B. Verdickungen, Verfärbungen, Geruchsveränderungen). Durch die hohen Einsatzmengen ergeben sich als weiterer Nachteil die daraus resultierenden erhöhten Kosten. Die Anforderungen an ein voll umfänglich einsetzbares Biozidprodukt werden daher von organischen Säuren als alleinigem bioziden Wirkstoff nicht in allen Anwendungen erfüllt.

In EP 1621076B1 sind Zusammensetzungen enthaltend DBDCB und das Biozid 2-Methyl-3-isothiazolin-3-on (MIT) beschrieben. Da MIT ein stark sensibilisierendes Potential aufweist, eignen sich solche Zusammensetzungen enthaltend DBDCB und MIT auch nicht für solche Anwendungen, in denen es besonders auf eine verbesserte Hautverträglichkeit ankommt.

In EP 0098410B1 sind Zusammensetzungen enthaltend DBDCB und das Biozid 1,2-Benz-isothiazolin-3-on (BIT) beschrieben. Da auch BIT ein stark sensibilisierendes Potential aufweist, ergibt sich gleiche Problematik wie unter EP 1621076B1 beschrieben. In US 5034405A sind Zusammensetzungen enthaltend DBDCB und das Biozidgemisch 5-Chloro-2-methyl-4-isothiazolin-3-on/ 2-Methyl-4-isothiazolin-3-on (CMIT/MIT) beschrieben. Da auch das Wirkstoffgemisch CMIT/MIT seinerseits ein stark sensibilisierendes Potential aufweist, stellen auch diese Zusammensetzungen keine Lösung hinsichtlich der Bereitstellung einer Zusammensetzung mit verbesserter Hautverträglichkeit dar.

Es besteht daher weiterhin ein Bedarf an verbesserten Produktkombinationen, um das an sich gegebene antimikrobielle Wirkspektrum von DBDCB bzw. von organischen Säuren wie z.B. Benzoesäure, Milchsäure, Salicylsäure, Sorbinsäure oder Zitronensäure sowie jeweils deren Derivaten zu verbessern. Ferner soll eine hautverträglichere Produktkombination, verglichen mit DBDCB als alleinigem bioziden Wirkstoff, bereitgestellt werden.

Überraschenderweise wurde nun gefunden, dass Zusammensetzungen auf Basis von 1,2-Dibrom-2,4-dicyanobutan (DBDCB) und wenigstens einer organischen Säure und/oder deren Derivate die Nachteile der jeweiligen Einzelkomponenten in vorteilhafter Weise überwinden können.

Darüber hinaus zeichnen sich die erfindungsgemäßen Zusammensetzungen überraschend dadurch aus, dass sie in spezifischen Mischungsverhältnissen eine unerwartet hohe, synergistische Wirkungssteigerung aufweisen. Daraus folgt, dass die zum Schutz technischer Produkte benötigten Einsatzkonzentrationen im Falle der erfindungsgemäßen Zusammensetzungen, verglichen mit den nötigen Konzentrationen im Falle der jeweiligen Einzelwirkstoffe, herabgesetzt werden können. Dies ist unter ökonomischen, ökologischen und anwendungstechnischen Gesichtspunkten ausgesprochen vorteilhaft, da hierdurch die erwünschte Verbesserung der Hautverträglichkeit beim Einsatz von DBDCB ohne Einbuße der Konservierungsqualität erreicht werden kann.

Die vorliegende Erfindung betrifft daher Zusammensetzungen, die dadurch gekennzeichnet sind, dass sie 1,2-Dibrom-2,4-dicyanobutan (DBDCB) und wenigstens eine organische Säure und/oder deren Derivate enthalten.

Die relativen Verhältnisse von DBDCB zu der wenigstens einen organischen Säure und/oder deren Derivaten in den erfindungsgemäßen Zusammensetzungen können über einen weiten Bereich variieren. Bevorzugt ist das Gewichtsverhältnis von DBDCB zu der wenigstens einen organischen Säure und/oder deren Derivaten in der Zusammensetzung 99:1 bis 1:99 , besonders bevorzugt 9:1 bis 1:9.

Des Weiteren liegen in den erfindungsgemäßen Zusammensetzungen bevorzugt wenigstens 60 Gew.-%, besonders bevorzugt wenigstens 80 Gew.-%, ganz besonders bevorzugt wenigstens 90 Gew.-%, noch weiter bevorzugt wenigstens 95 Gew.-% der Summe aus DBDCB und der wenigstens einen organischen Säure und/oder deren Derivaten, bezogen auf das Gesamtgewicht der erfindungsgemäßen Zusammensetzung, in gelöster Form vor.

**Organische Säuren**

Die erfindungsgemäßen Zusammensetzungen enthalten bevorzugt wenigstens eine organische Säure und/oder deren Derivate, welche ausgewählt ist aus der Gruppe bestehend aus Mono- und Polycarbonsäuren und deren Derivaten, besonders bevorzugt wenigstens eine organische Säure und/oder deren Derivate, welche ausgewählt ist aus der Gruppe bestehend aus Benzoesäure, Milchsäure, Salicylsäure, Sorbinsäure und Zitronensäure und deren Derivaten.

Bevorzugt sind die Derivate der wenigstens einen organischen Säure Alkalimetallsalze.

Bevorzugt sind die Alkalimetallsalze der wenigstens einen organischen Säure ausgewählt aus der Gruppe bestehend aus Natrium-, Kalium- und Lithiumsalzen.

In einer bevorzugten Ausführungsform enthält die erfindungsgemäße Zusammensetzung Benzoesäure und/oder deren Derivate als die wenigstens eine organische Säure und/oder deren Derivate.

Bevorzugt ist das Gewichtsverhältnis von DBDCB zu Benzoesäure und/oder deren Derivaten als die wenigstens eine organische Säure und/oder deren Derivaten in der erfindungsgemäßen Zusammensetzung 9:1 bis 1:9 , besonders bevorzugt 9:1 bis 6:4 oder 4:6 bis 2:8.

In einer weiteren bevorzugten Ausführungsform enthält die erfindungsgemäße Zusammensetzung Milchsäure und/oder deren Derivate als die wenigstens eine organische Säure und/oder deren Derivate.

Bevorzugt ist das Gewichtsverhältnis von DBDCB zu Milchsäure und/oder deren Derivaten als die wenigstens eine organische Säure und/oder deren Derivaten in der erfindungsgemäßen Zusammensetzung 9:1 bis 1: 9 , besonders bevorzugt 9:1 bis 6:4.

In einer anderen bevorzugten Ausführungsform enthält die erfindungsgemäße Zusammensetzung Salicylsäure und/oder deren Derivate als die wenigstens eine organische Säure und/oder deren Derivate.

Bevorzugt ist das Gewichtsverhältnis von DBDCB zu Salicylsäure und/oder deren Derivaten als die wenigstens eine organische Säure und/oder deren Derivaten in der Zusammensetzung 9:1 bis 1: 9, besonders bevorzugt 9 :1 bis 3:7, ganz besonders bevorzugt 9:1 bis 6:4 oder 5:4 bis 3:7.

Besonders bevorzugt wird Salicylsäure und/oder deren Derivate als die wenigstens eine organische Säure und/oder deren Derivate in der erfindungsgemäßen Zusammensetzung in Form einer Zusammensetzung SA eingesetzt, welche wenigstens 10 Gew.-%, bevorzugt wenigstens 30 Gew.-%, besonders bevorzugt weigstens 50 Gew.-%, ganz besonders bevorzugt wenigstens 75 Gew.-% Salicylsäure und/oder deren Derivate, bezogen auf das Gesamtgewicht der Zusammensetzung SA, enthält.

In einer ganz besonders bevorzugten Ausführungsform ist die Zusammensetzung SA ein Salix Alba-Extrakt.

Salix Alba-Extrakt ist ein Extrakt aus der Rinde der Silberweide (Salix alba), welche eine Pflanzenart in der Gattung der Weiden aus der Familie der Weidengewächse (Salicaceae) ist. Ein Salix Alba-Extrakt wird durch dem Fachmann bekannte Verfahren aus der Rinde der Silberweide gewonnen, bevorzugt durch Extraktion, besonders bevorzugt durch Extraktion mit Wasser und/oder Ethanol.

In einer anderen bevorzugten Ausführungsform enthält die erfindungsgemäße Zusammensetzung Zitronensäure und/oder deren Derivate als die wenigstens eine organische Säure und/oder deren Derivate.

Bevorzugt ist das Gewichtsverhältnis von DBDCB zu Zitronensäure und/oder deren Derivaten als die wenigstens eine organische Säure und/oder deren Derivaten in der erfindungsgemäßen Zusammensetzung 9:1 bis 1:9 , besonders bevorzugt 9:1 bis 5:5, ganz besonders bevorzugt 9:1 bis 7:3.

**Weitere biozide Wirkstoffe**

Die erfindungsgemäßen Zusammensetzungen können neben DBDCB und der wenigstens einen organischen Säure und/oder deren Derivaten zusätzlich keinen oder wenigstens einen weiteren bioziden Wirkstoff enthalten.

Als bevorzugte weitere biozide Wirkstoffe seien die folgenden Wirkstoffe genannt:

1,2-Benzisothiazol-3(2H)-on (BIT)
Benzylalkohol
Benzylhemiformal
2-Bromo-2-nitropropan-1 3-diol (Bronopol)
5-Chloro-2-methyl-4-isothiazolin-3-on / 2-Methyl-4-isothiazolin-3-on (CMIT/MIT)
2,2-Dibromo-3-nitrilopropionamid (DBNPA)
Diazolidinylharnstoff
3,3-Dimethylol-5,5-dimethylhydantoin (DMDMH)
Dichlorbenzylalkohol

Di-decyl-di-methyl-ammoniumchlorid

Dimethylolhydantoin

Dodecylguanidinhydrochlorid

Imidazolidinylharnstoff

lodpropargylbutylcarbamat (IPBC)

2-n-Octylisothiazolin-3-on (OIT)

Phenoxyethanol

Phenoxypropanol

Phenylethylalkohol

o-Phenyl-phenol (OPP)

Poly(hexamethylenebiguanide) hydrochloride (PHMB)

Tetramethylolacetylendiharnstoff (TMAD)

Das Gewichtsverhältnis des wenigstens einen weiteren bioziden Wirkstoffs zu der Summe von DBDCB und der wenigstens einen organischen Säure und/oder deren Derivaten ist bevorzugt 1 : 40 bis 1 : 1.

In den erfindungsgemäßen Zusammensetzungen kann die Summe der Gew.-% von DBDCB und der wenigstens einen organischen Säure und/oder deren Derivaten und des zusätzlich keinen oder wenigstens einen weiteren bioziden Wirkstoffs in einem breiten Bereich variiert werden.

Bevorzugt beträgt die Summe von DBDCB, der wenigstens einen organischen Säure und/oder deren Derivaten und des zusätzlich keinen oder wenigstens einen weiteren bioziden Wirkstoffs 1 bis 80 Gew.-%, besonders bevorzugt 5 bis 60 Gew.%, bezogen auf das Gesamtgewicht der erfindungsgemäßen Zusammensetzung.

**Weitere Zusatzstoffe**

Die erfindungsgemäße Zusammensetzung kann keinen oder wenigstens einen weiteren Zusatzstoff enthalten.

Die Applikation der erfindungsgemäßen Zusammensetzung kann, in Abhängigkeit von ihren jeweiligen physikalischen und/oder chemischen Eigenschaften bzw. den spezifischen Erfordernissen des zu lösenden Konservierungsproblems, entweder separat in Form einer Zudosierung der Einzelwirkstoffe erfolgen, wobei je nach vorliegendem Konservierungsproblem eine individuelle Einstellung des Konzentrationsverhältnisses vorgenommen werden kann, oder die Zudosierung der erfindungsgemäßen Zusammensetzung kann als fertige Formulierung erfolgen.

Bevorzugt liegen die erfindungsgemäßen Zusammensetzungen als fertige Formulierungen vor.

Besonders bevorzugt liegen die erfindungsgemäßen Zusammensetzungen als Formulierung vor, die eine Lösung, eine Dispersion, eine Emulsion, eine Suspension, ein Pulver, ein Schaum, eine Paste, ein Granulat, Aerosol oder eine feinstverkapselte Form in polymeren Stoffen ist.

Die erfindungsgemäßen Zusammensetzungen können daher weiterhin wenigstens ein Hilfsmittel, das geeignet zur Herstellung einer Formulierung ist, als weiteren Zusatzstoff enthalten oder nicht enthalten.

Bevorzugt enthält die erfindungsgemäße Zusammensetzung wenigstens ein Hilfsmittel als weiteren Zusatzstoff.

Bevorzugt enthält die erfindungsgemäße Zusammensetzung wenigstens ein Hilfsmittel ausgewählt aus der Gruppe bestehend aus grenzflächenaktive Stoffe, Benetzungsmittel, Emulgatoren, Dispergiermittel, Stabilisatoren, Haftmittel, Verdicker, Spreitmittel, organische Lösungsmittel, Duftstoffe, Farbmittel, Entstaubungsmittel, Puffersubstanzen, Puffersysteme, pH-Wert-Regulatoren, feste Trägerstoffe und Wasser.

In einer bevorzugten erfindungsgemäßen Zusammensetzung, in der mehrere Hilfsmittel aus obiger Gruppe ausgewählt sind, sind diese Hilfsmittel voneinander verschieden.

Im Folgenden sind die bevorzugten Hilfsmittel der vorliegenden Erfindung beispielhaft näher ausgeführt:

- Grenzflächenaktive Stoffe, wie beispielsweise Tenside. Tenside können beispielsweise nichtionische, kationische und amphotere Tenside, vorzugsweise anionische Tenside sein. Geeignete anionische Tenside sind beispielsweise Alkylsulfate, Alkylethersulfate, Alkylarylsulfonate, Alkylsuccinate, Alkylsulfosuccinate, N-Alkoyl-sarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium, Kalium, Magnesium, Calcium, sowie Ammonium- und Triethanolamin-Salze. Die Alkylethersulfate, Alkyletherphosphate und Alkylethercarboxylate können jeweils beispielsweise zwischen 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat.

- Benetzungsmittel, wie beispielsweise Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether-und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose.

- Emulgatoren, wie beispielsweise Natrium-, Kalium- und Ammoniumsalze von gradkettigen aliphatischen Carbonsäuren der Kettenlänge $C_{12}$-$C_{20}$, Natriumhydroxyoctadecansulfonat, Natrium-, Kalium- und Ammoniumsalze von Hydroxyfettsäuren der Kettenlänge $C_{12}$-$C_{20}$ und deren Sulfierungs-bzw. Acetylierungsprodukte, Alkylsulfate, auch als Triethanolaminsalze, Alkyl-($C_{10}$-$C_{20}$)-sulfonate, Alkyl($C_{10}$-$C_{20}$)-arylsulfonate, Dimethyldialkyl($C_8$-$C_{18}$)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylenglykolethern von einwertigen aliphatischen Alkoholen der Kettenlänge $C_{10}$-$C_{12}$ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium-und Ammoniumsalze, Polyoxyethylen-sorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol.

- Dispergiermittel, wie beispielsweise Alkylphenolpolyglycolether.

- Stabilisatoren, wie z.B. Cellulose und Cellulosederivate.

- Haftmittel und Verdicker, wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipid sowie mineralische oder pflanzliche Öle.

- Spreitmittel, wie beispielsweise Isopropylmyristat, Polyoxyethylennonylphenylether und Polyoxyethylenlaurylphenylether.

- Organische Lösungsmittel, wie beispielsweise ein- oder mehrwertige Alkohole, Glykole, Ester, Ketone oder Kohlenwasserstoffe. Bevorzugte organische Lösungsmittel sind Paraffine, mineralische und pflanzliche Öle, Butanol und Glykol sowie deren Ether und Ester, Ketone wie Aceton, Methylethylketon, Methylisobutylketon oder Cyclohexanon, besonders bevorzugt Glykole, ganz besonders bevorzugt 1,2-Propandiol.

- Duftstoffe, Farbmittel, wie anorganische Pigmente, z.B. Eisenoxid, Titanoxid, Ferrocyanblau und organische Farbmittel, wie Alizarin-, Azo- und Metallphthalocyaninfarbmittel und Spurennährstoffe wie Salze von Eisen, Mangan, Bor, Kupfer, Kobalt, Molybdän und Zink.

- Puffersubstanzen, Puffersysteme oder pH-Wert-Regulatoren. Die erfindungsgemäßen Zusammensetzungen können dabei beispielsweise jeweils 0,01 bis 10, vorzugsweise 0,1 bis 5 Gew.-% an Puffersubstanzen, Puffersystemen oder pH-Wert-Regulatoren enthalten.

- Feste Trägerstoffe wie beispielsweise natürliche Gesteinsmehle, wie Kaoline, Tonerden, Talkum, Kreide, Quarz, Attapulgit, Montmorillonit oder Diatomeenerde sowie synthetische Gesteinsmehle, wie hochdisperse Kieselsäure, Aluminiumoxid und Silikate. Als feste Trägerstoffe insbesondere für Granulate sind beispielsweise geeignet: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstangen;

- Wasser.

Bevorzugt enthält die erfindungsgemäße Zusammensetzung wenigstens ein organisches Lösungsmittel als Hilfsmittel, besonders bevorzugt wenigstens ein Glykol.

In der erfindungsgemäßen Zusammensetzung sind bevorzugt 20-99 Gew.% besonders bevorzugt 40 bis 95 Gew.% wenigstens eines weiteren Zusatzstoffes enthalten, bezogen auf das Gesamtgewicht der erfindungsgemäßen Zusammensetzung.

Eine bevorzugte erfindungsgemäße Zusammensetzung enthält 10-30 Gew.-% DBDCB, 10-30 Gew.-% Salix Alba-Extrakt, welcher wenigstens 10 Gew.-%, bevorzugt wenigstens 30 Gew.-%, besonders bevorzugt weigstens 50 Gew.-%, ganz besonders bevorzugt wenigstens 75 Gew.-% Salicylsäure und/oder deren Derivate, bezogen auf das Gesamtgewicht des Salix Alba-Extraktes, und 40-80 Gew.-% eines Glykols, bevorzugt 1,2-Propandiol enthält.

**Herstellung**

Die Erfindung betrifft weiterhin ein Verfahren zur Herstellung der erfindungsgemäßen Zusammensetzung, dadurch gekennzeichnet, dass man DBDCB und die wenigstens eine organische Säure und/oder deren Derivate gegebenenfalls unter Zugabe wenigstens eines weiteren bioziden Wirkstoffs und gegebenenfalls unter Zugabe wenigstens eines weiteren Zusatzstoffes, miteinander vermischt.

Eine bevorzugte Herstellung der erfindungsgemäßen Zusammensetzung ist dadurch gekennzeichnet, dass man DBDCB und die wenigstens eine organische Säure und/oder deren Derivate sowie wenigstens einen weiteren Zusatzstoff, bevorzugt wenigstens ein Lösungsmittel, miteinander vermischt.

Es gelten für die erfindungsgemäße Herstellung die obigen Angaben bezüglich der weiteren bioziden Wirkstoffe, der Zusatzstoffe und Hilfsmittel analog.

**Verwendung**

Die Erfindung betrifft weiterhin die Verwendung der erfindungsgemäßen Zusammensetzungen zum Schutz von technischen Materialien vor Befall und/oder Zerstörung durch Mikroorganismen.

Bevorzugt sind als technische Materialien, die unter Verwendung der erfindungsgemäßen Zusammensetzungen vor Befall und/oder Zerstörung durch Mikroorganismen geschützt werden sollen, wasserhaltige funktionelle Flüssigkeiten und wasserhaltige technische Produkte zu nennen.

Beispielhaft, jedoch ohne zu limitieren, sei die Verwendung in folgenden technischen Materialien genannt:

- Anstrichmittel, Farben, Putze und sonstige Beschichtungsmittel
- Stärkelösungen und -slurrys oder andere auf Basis von Stärke hergestellte Produkte wie z.B. Druckverdicker
- Slurrys anderer Rohstoffe wie Farbpigmente (z.B. Eisenoxidpigmente, Rußpigmente, Titandioxidpigmente) oder Slurrys von anorganischen Füllstoffen und Pigmenten wie Kaolin, Calciumcarbonat, Gips, Bentonit, Magnesium Silikate, Smectid oder Talkum.
- Bauchemische Produkte wie Betonadditive beispielsweise auf Basis von Melasse, Ligninsulfonat oder Polyacrylaten, Bituimenemulsionen oder Fugendichtungsmassen
- Leime oder Klebstoffe auf Basis der bekannten tierischen, pflanzlichen oder synthetischen Rohstoffe
- Polymerdispersionen auf Basis von z.B. Polyacrylat, Polystyrolacrylat, Styrolbutadien, Polyvinylacetat u.a.
- Spülmittel, flüssigen Waschmittel und Haushaltsreiniger für den technischen und Haushaltsbedarf
- Mineralöle und Mineralölprodukte (wie z.B. Dieselkraftstoffe)
- Kühlschmierstoffe zur Metallverarbeitung auf Basis von Mineralöl-haltigen, halbsynthetischen oder synthetischen Konzentraten
- Hilfsmittel für die Leder-, Textil- oder photochemische Industrie
- Vor- und Zwischenprodukte der chemischen Industrie, z.B. bei der Farbstoffproduktion und -lagerung
- Tinten oder Tuschen
- Wachs und Tonemulsionen

Bevorzugt werden die erfindungsgemäßen Zusammensetzungen zum Schutz von Detergentien und oberflächenaktiven Stoffen, die bevorzugt in Spülmitteln, flüssigen Waschmitteln, Haushaltsreinigern und sonstigen Reinigern enthalten sind, verwendet.

Die Anwendungskonzentrationen der erfindungsgemäß zu verwendenden erfindungsgemäßen Mischung richten sich nach der Art und dem Vorkommen der zu bekämpfenden Mikroorganismen, der mikrobiellen Ausgangsbelastung, der zu erwartenden Lagerdauer der zu schützenden Produkte sowie nach der mikrobiologischen Anfälligkeit der in den Endprodukten enthaltenen Komponenten. Die optimale Einsatzmenge kann durch Vorversuche und Testreihen im Labor in einer dem Fachmann hinlänglich bekannten Weise einfach ermittelt werden.

Bevorzugt werden die erfindungsgemäßen Zusammensetzungen im Bereich von 0,01 bis 5 Gew.-%, besonders bevorzugt von 0,05 bis 1,0 Gew.-%, bezogen auf das Gewicht des zu schützenden Materials, zum Schutz von technischen Materialien eingesetzt.

Die Erfindung betrifft weiterhin technische Materialien, die mit der erfindungsgemäßen Zusammensetzung behandelt wurden.

Weiter umfasst die vorliegende Erfindung technische Materialien, die eine erfindungsgemäße Zusammensetzung enthalten.

Bevorzugt enthalten die technischen Materialien, die die erfindungsgemäße Zusammensetzung enthalten, diese im Bereich von 0,01 bis 5 Gew.-%, besonders bevorzugt von 0,05 bis 1,0 Gew.-%, bezogen auf das Gewicht des technischen Materials.

Es gelten für die technischen Materialien die obigen beispielhaft genannten technischen Materialien analog.

Bevorzugt umfasst die vorliegende Erfindung als technische Materialien Spülmittel, flüssige Waschmittel und Haushaltsreiniger, welche die erfindungsgemäße Zusammensetzung enthalten.

Die erfindungsgemäße Zusammensetzung ist wirksam gegen Mikroorganismen der verschiedensten Art, wie z.B. Bakterien, Schimmelpilze, Hefen sowie Schleimorganismen.

Beispielhaft, jedoch ohne zu limitieren, seien die folgenden Arten genannt, gegen die die erfindungsgemäße Zusammensetzung Wirksamkeit aufweist:

Bakterien:

*Alcaligenes* wie *Alcaligenes faecalis, Bacillus* wie *Bacillus subtilis, Enterobacter* wie *Enterobacter aerogenes, Escherichia* wie *Escherichia coli, Proteus* wie *Proteus vulgaris, Pseudomonas* wie *Pseudomonas aeruginosa* oder *Pseudomonas fluorescens, Serratia* wie *Serratia marescens, Staphylococcus* wie *Staphylococcus aureus.*

Hefen:

*Candida* wie *Candida albicans, Geotrichum* wie *Geotrichum candidum, Rhodotorula* wie *Rhodotorula rubra, Rhodotorula mucilaginosa, Saccharomyces* wie *Saccharomyces cerevisiae.*

Pilze:

*Acremonium* wie *Acremonium strictum, Alternaria* wie *Alternaria tenuis* oder *Alternaria alternata, Aspergillus* wie *Aspergillus niger, Chaetomium* wie *Chaetomium globosum, Fusarium* wie *Fusarium solani, Lentinus* wie *Lentinus tigrinus, Paecilomyces* wie *Paecilomyces variotti, Penicillium* wie *Penicillium glaucum, Trichoderma* wie *Trichoderma viride.*

In den nachfolgenden Beispielen wird die überraschende Wirkungsverstärkung der erfindungsgemäßen Zusammensetzung beispielhaft, ohne zu limitieren, dokumentiert.

**Beispiele**

Der Synergismus der erfindungsgemäßen Zusammensetzung wird im Folgenden beispielhaft gegen bestimmte, insbesondere praxisrelevante Keime wie z.B. *Pseudomonas aeruginosa, Staphylococcus aureus, Alternaria alternata* oder *Geotrichum candidum* gezeigt.

Der gefundene Synergismus der erfindungsgemäßen Zusammensetzungen lässt sich über folgenden mathematischen Ansatz ermitteln (vgl. F.C. Kull, P.C. Elisman, H.D. Sylwestrowicz, P.K. Mayer, Appl. Microbiol. 9, 1961, S. 538:

$$\text{synergistischer Index (SI)} = \frac{Q_a}{Q_A} + \frac{Q_b}{Q_B}$$

wobei gilt:

$Q_a$ = Menge Komponente A in der Wirkstoffmischung, die den gewünschten Effekt, d.h. kein mikrobielles Wachstum, erzielt,

$Q_A$ = Menge Komponente A, die allein eingesetzt, das Wachstum der Mikroorganismen unterdrückt,

$Q_b$ = Menge Komponente B in der Wirkstoffmischung, die den gewünschten Effekt, d.h. kein mikrobielles Wachstum, erzielt,

und $Q_B$ = Menge Komponente B, die allein eingesetzt, das Wachstum der Mikroorganismen unterdrückt.

Ein gemäß obiger Formel resultierender synergistischer Index von SI <1 zeigt für die Wirkstoffmischung einen synergistischen Effekt an. Je geringer der SI ist, desto größer ist der synergistische Effekt.

Beispielhaft, ohne zu limitieren, wird anhand der nachfolgenden Beispiele und Berechnungen die synergistische Wirkungsverstärkung erläutert.

**Beispiel 1**

Mit verschiedenen Testkeimen wurden die minimalen Hemmkonzentration ermittelt und darauf basierend anhand der Formel von F.C. Kull et. al. die Synergieeffekte der aufgeführten erfindungsgemäßen Zusammensetzungen berechnet.

**Zusammensetzungen enthaltend DBDCB und Zitronensäure**

Tabelle 1 (Testkeim: *Staphylococcus aureus*):

| Nr. | DBDCB: Zitronensäure [Gew.-%/ Gew.-%] | $Q_a$ DBDCB [ppm] | $Q_b$ Zitronensäure [ppm] | SI |
|---|---|---|---|---|
| 1 | 9:1 | 45 | 5 | 0,90 |
| 2 | 8:2 | 40 | 10 | 0,80 |
| 3 | 7:3 | 35 | 15 | 0,70 |
| (Testkeim: *Staphylococcus aureus* => $Q_A$ = 50 ppm DBDCB, $Q_B$ = 3001 ppm Zitronensäure) | | | | |

Die erfindungsgemäßen Zusammensetzungen weisen in bestimmten Konzentrationsverhältnissen eine ausgeprägte synergistische Wirkung gegen den Testkeim *Staphylococcus aureus* auf.

Tabelle 2 (Testkeim: *Alternaria alternata*)*:*

| Nr. | DBDCB: Zitronensäure [Gew.-%/ Gew.-%] | $Q_a$ DBDCB [ppm] | $Q_b$ Zitronensäure [ppm] | SI |
|---|---|---|---|---|
| 1 | 9:1 | 22,5 | 2,5 | 0,90 |
| 2 | 8:2 | 20 | 5 | 0,80 |
| 3 | 7:3 | 17,5 | 7,5 | 0,70 |
| (Testkeim: *Alternaria alternata* => $Q_A$ = 25 ppm DBDCB, $Q_B$ = 3001 ppm Zitronensäure) | | | | |

Die erfindungsgemäßen Zusammensetzungen weisen in bestimmten Konzentrationsverhältnissen eine ausgeprägte synergistische Wirkung gegen den Testkeim *Alternaria alternata* auf.

Tabelle 3 (Testkeim: *Geotrichum candidum*):

| Nr. | DBDCB: Zitronensäure [Gew.-%/ Gew.-%] | $Q_a$ DBDCB [ppm] | $Q_b$ Zitronensäure [ppm] | SI |
|---|---|---|---|---|
| 1 | 9:1 | 90 | 10 | 0,90 |
| 2 | 8:2 | 80 | 20 | 0,81 |
| 3 | 7:3 | 35 | 15 | 0,35 |
| (Testkeim: *Geotrichum candidum* => $Q_A$ = 100 ppm DBDCB, $Q_B$ = 3001 ppm Zitronensäure) | | | | |

Die erfindungsgemäßen Zusammensetzungen weisen in bestimmten Konzentrationsverhältnissen eine ausgeprägte synergistische Wirkung gegen den Testkeim *Geotrichum candidum* auf.

**Zusammensetzungen enthaltend DBDCB und Milchsäure**

Tabelle 4 (Testkeim: *Pseudomonas aeruginosa*)*:*

| Nr. | DBDCB : Milchsäure [Gew.-%/ Gew.-%] | $Q_a$ DBDCB [ppm] | $Q_b$ Milchsäure [ppm] | SI |
|---|---|---|---|---|
| 1 | 9:1 | 450 | 50 | 0,92 |
| 2 | 8:2 | 400 | 100 | 0,83 |
| 3 | 7:3 | 350 | 150 | 0,75 |
| 4 | 6:4 | 300 | 200 | 0,67 |
| (Testkeim: *Pseudomonas aeruginosa* => $Q_A$ = 500 ppm DBDCB, $Q_B$ = 3001 ppm Milchsäure) | | | | |

Die erfindungsgemäßen Zusammensetzungen weisen in bestimmten Konzentrationsverhältnissen eine ausgeprägte synergistische Wirkung gegen den Testkeim *Pseudomonas aeruginosa* auf.

Tabelle 5 (Testkeim: *Alternaria alternata*)*:*

| Nr. | DBDCB : Milchsäure [Gew.-%/ Gew.-%] | $Q_a$ DBDCB [ppm] | $Q_b$ Milchsäure [ppm] | SI |
|---|---|---|---|---|
| 1 | 9:1 | 22,5 | 2,5 | 0,90 |
| 2 | 8:2 | 20 | 5 | 0,80 |
| 3 | 7:3 | 17,5 | 7,5 | 0,70 |
| 4 | 6:4 | 15 | 10 | 0,60 |
| 5 | 5:5 | 12,5 | 12,5 | 0,50 |
| 6 | 4:6 | 10 | 15 | 0,40 |
| 7 | 3:7 | 15 | 35 | 0,61 |
| 8 | 2:8 | 15 | 60 | 0,62 |
| 9 | 1:9 | 10 | 90 | 0,43 |
| (Testkeim: *Alternaria alternata* => $Q_A$ = 25 ppm DBDCB, $Q_B$ = 3001 ppm Milchsäure) | | | | |

Die erfindungsgemäßen Zusammensetzungen weisen in bestimmten Konzentrationsverhältnissen eine ausgeprägte synergistische Wirkung gegen den Testkeim *Alternaria alternata* auf

**Zusammensetzungen enthaltend DBDCB und Salicylsäure**

Tabelle 6 (Testkeim: *Pseudomonas aeruginosa*)*:*

| Nr. | DBDCB : Salicylsäure [Gew.-%/ Gew.-%] | $Q_a$ DBDCB [ppm] | $Q_b$ Salicylsäure [ppm] | SI |
|---|---|---|---|---|
| 1 | 9:1 | 225 | 25 | 0,91 |
| 2 | 8:2 | 200 | 50 | 0,82 |
| 3 | 7:3 | 175 | 75 | 0,72 |
| 4 | 6:4 | 150 | 100 | 0,63 |
| 5 | 4:6 | 200 | 300 | 0,90 |
| 6 | 3:7 | 150 | 350 | 0,72 |
| (Testkeim: *Pseudomonas aeruginosa* $Q_A$ = 250 ppm DBDCB, $Q_B$ = 3001 ppm Salicylsäure) | | | | |

Die erfindungsgemäßen Zusammensetzungen weisen in bestimmten Konzentrationsverhältnissen eine ausgeprägte synergistische Wirkung gegen den Testkeim *Pseudomonas aeruginosa* auf.

Tabelle 7 (Testkeim: *Alternaria alternata*)*:*

| Nr. | DBDCB : Salicylsäure [Gew.-%/ Gew.-%] | $Q_a$ DBDCB [ppm] | $Q_b$ Salicylsäure [ppm] | SI |
|---|---|---|---|---|
| 1 | 9:1 | 22,5 | 2,5 | 0,91 |
| 2 | 8:2 | 20 | 5 | 0,81 |
| 3 | 7:3 | 17,5 | 7,5 | 0,72 |
| 4 | 4:6 | 20 | 30 | 0,86 |
| 5 | 3:7 | 15 | 35 | 0,67 |
| 6 | 2:8 | 15 | 60 | 0,72 |
| (Testkeim: *Alternaria alternata* => $Q_A$ = 25 ppm DBDCB, $Q_B$ = 500 ppm Salicylsäure) | | | | |

Die erfindungsgemäßen Zusammensetzungen weisen in bestimmten Konzentrationsverhältnissen eine ausgeprägte synergistische Wirkung gegen den Testkeim *Alternaria alternata* auf

**Zusammensetzungen enthaltend DBDCB und Benzoesäure**

Tabelle 8 (Testkeim: *Bacillus subtilis*):

| Nr. | DBDCB: Benzoesäure [Gew.-%/ Gew.-%] | $Q_a$ DBDCB [ppm] | $Q_b$ Benzoesäure [ppm] | SI |
|---|---|---|---|---|
| 1 | 9:1 | 22,5 | 2,5 | 0,90 |
| 2 | 8:2 | 20 | 5 | 0,80 |
| 3 | 7:3 | 17,5 | 7,5 | 0,70 |
| 4 | 6:4 | 22,5 | 15 | 0,91 |
| 5 | 5:5 | 25 | 25 | 1,01 |
| 6 | 4:6 | 20 | 30 | 0,81 |
| 7 | 3:7 | 15 | 35 | 0,61 |
| 8 | 2:8 | 20 | 80 | 0,83 |
| ($Q_A$ = 25 ppm DBDCB, $U_B$ = 3000 ppm Benzoesäure) | | | | |

Die erfindungsgemäßen Zusammensetzungen weisen in bestimmten Konzentrationsverhältnissen eine ausgeprägte synergistische Wirkung gegen den Testkeim *Bacillus subtilis* auf.

Tabelle 9 (Testkeim: *Aspergillus brasiliensis*)*:*

| Nr. | DBDCB: Benzoesäure [Gew.-%/ Gew.-%] | $Q_a$ DBDCB [ppm] | $Q_b$ Benzoesäure [ppm] | SI |
|---|---|---|---|---|
| 1 | 9:1 | 225 | 25 | 0.93 |
| 2 | 8:2 | 200 | 50 | 0.85 |
| 3 | 7:3 | 175 | 75 | 0,78 |
| 4 | 6:4 | 150 | 100 | 0,70 |
| 5 | 5:5 | 125 | 125 | 0,63 |
| 6 | 4:6 | 100 | 150 | 0,55 |
| 7 | 3:7 | 150 | 350 | 0,95 |
| 8 | 2:8 | 100 | 400 | 0,80 |

(fortgesetzt)

| Nr. | DBDCB: Benzoesäure [Gew.-%/ Gew.-%] | $Q_a$ DBDCB [ppm] | $Q_b$ Benzoesäure [ppm] | SI |
|---|---|---|---|---|
| 9 | 1:9 | 50 | 450 | 0,65 |
| ($Q_A$ = 250 ppm DBDCB, $Q_B$ = 1000 ppm Benzoesäure) | | | | |

Die erfindungsgemäßen Zusammensetzungen weisen in bestimmten Konzentrationsverhältnissen eine ausgeprägte synergistische Wirkung gegen den Testkeim *Aspergillus brasiliensis.*

**Beispiel 2: Mikrobiologischer Belastungstest - Konservierung eines Spülmittels**

Untersucht wurde die konservierende Wirkung einer erfindungsgemäßen Zusammensetzung enthaltend DBDCB und Salix Alba-Extrakt in einem Handspülmittel mit Hilfe eines mikrobiologischen Belastungstests.

Mit dem mikrobiologischen Belastungstest wird die Anfälligkeit wasserbasierter Produkte gegen mikrobiellen Befall und die Wirkung von Konservierungsmitteln überprüft. Hierzu werden die Konservierungsmittel in definierten Konzentrationen in die wasserbasierten Systeme eingearbeitet. Nach Abschluss der Vorarbeiten erfolgt über einen Versuchszeitraum von 3 bis maximal 6 Wochen eine wiederholte Kontamination mit Mikroorganismen definierter Art und in definierten Mengen im wöchentlichen Abstand. 2-3 und 7 Tage nach jeder Kontamination wird durch Keimzahlbestimmung festgestellt, ob vollständige Abtötung oder zumindest Vermehrungshemmung der eingebrachten Mikroorganismen im Vergleich zur nicht konservierten Kontrollprobe eingetreten ist.

In Kenntnis der in Detergentien der hier beschriebenen Art vorherrschenden Mikroorganismen-Populationen wurde für den Versuch ein Gemisch der folgenden Mikroorganismenarten für die Prüfung eingesetzt:

Bakterien: *Escherichia coli, Pseudomonas aeruginosa, Staphylococcus aureus. Pseudomonas putida, Enterobacter gergoviae*

Schimmelpilze: *Acremonium strictum, Aspergillus niger* und *Geotrichum candidu.*

Hefen: *Candida albicans* und *Rhodotorula rubra.*

Eine sehr gute Wirksamkeit wird erreicht, wenn in den konservierten Proben eine vollständige Abtötung (auf 0 Bakterien bzw. auf 0 Schimmel- bzw. Hefezellen pro/g) der eingebrachten Mikroorganismen erfolgt (Bewertung 3 = sehr gut).

Eine gute Wirksamkeit liegt dann vor, wenn in den konservierten Proben im Vergleich zur unkonservierten Probe (sogenannte Nullprobe) ein stark reduziertes Mikrobenniveau beobachtet wird (auf $10^3 - 10^1$ Bakterien bzw. auf $10^2 - 10^1$ Schimmel- bzw. Hefezellen pro/g) (Bewertung 2 = gut).

Eine mäßige Wirksamkeit liegt dann vor, wenn im Vergleich zur unkonservierten Probe ein leicht reduziertes Mikrobenniveau beobachtet wird (auf $10^4 - 10^3$ Bakterien bzw. auf $10^3 - 10^2$ Schimmel- bzw. Hefezellen pro/g) (Bewertung 1 = mäßig).

Eine mangelhafte Wirksamkeit liegt dann vor, wenn im Vergleich zur unkonservierten Probe keine oder eine nur geringfügige Reduktion des Mikrobenniveaus beobachtet wird (auf ein Restniveau von mindestens $10^5$ Bakterien bzw. $10^4$ Schimmel- bzw. Hefezellen pro/g) (Bewertung 0 = mangelhaft). Die erzielten Ergebnisse sind in Tabelle 10 angegeben.

Folgende Zusammensetzungen wurden in den in Tabelle 10 dargestellten Versuchen eingesetzt:

A: DBDCB

B: Zusammensetzung enthaltend 25 Gew.-% Salix Alba-Extrakt (der 80 Gew.-% Salicylsäure enthält) und 75 Gew.-% 1,2-Propandiol.

C: Zusammensetzung enthaltend 20 Gew.-% DBDCB, 20 Gew.-% Salix Alba-Extrakt (der 80 Gew.-% Salicylsäure enthält) und 60 Gew.-% 1,2-Propandiol (erfindungsgemäß).

Tabelle 10: Wirksamkeit der Biozide in einem Handspülmittel, ermittelt jeweils 1 Woche nach Keimzugabe

| Eingesetzte Zusammensetzung | Zugegebenes Biozid [Gew.-%] | | Woche | | | | | |
|---|---|---|---|---|---|---|---|---|
| | | | 1 | 2 | 3 | 4 | 5 | 6 |
| A | DBDCB [0,05] | B | 1 | 0 | 0 | 0 | 0 | 0 |
| | | S | 3 | 3 | 0 | 0 | 0 | 0 |
| | | H | 3 | 3 | 0 | 0 | 0 | 0 |
| B | Salicylsäure [0,02] | B | 1 | 0 | 0 | 0 | 0 | 0 |
| | | S | 1 | 1 | 0 | 0 | 0 | 0 |
| | | H | 1 | 0 | 0 | 0 | 0 | 0 |
| C | DBDCB [0,02] und Salicylsäure [0,016] | B | 3 | 3 | 3 | 3 | 3 | 3 |
| | | S | 1 | 3 | 3 | 3 | 3 | 3 |
| | | H | 3 | 3 | 3 | 3 | 3 | 3 |

(B = Bakterien, S = Schimmelpilze, H = Hefen)
3 = sehr gute Wirksamkeit
2 = gute Wirksamkeit
1 = mäßige Wirksamkeit
0 = mangelhafte Wirksamkeit

Durch Zugabe einer erfindungsgemäßen Zusammensetzung enthaltend DBDCB und Salix Alba-Extrakt, welcher 80 Gew.-% Salicylsäure enthält, wird trotz deutlich herabgesetzter Wirkstoffmenge gegenüber dem Einzelwirkstoff DBDCB eine sehr gut wirksame Konservierung erzielt, d.h. alle zur Prüfung eingesetzten Mikroorganismenarten werden durch die erfindungsgemäße Mischung abgetötet.

**Patentansprüche**

1. Zusammensetzung, **dadurch gekennzeichnet, dass** sie 1,2-Dibrom-2,4-dicyano-butan (DBDCB) und wenigstens eine organische Säure und/oder deren Derivate enthält.

2. Zusammensetzung gemäß Anspruch 1, **dadurch gekennzeichnet, dass** das Gewichtsverhältnis von DBDCB zu der wenigstens einen organischen Säure und/oder deren Derivaten in der Zusammensetzung 99:1 bis 1: 99, bevorzugt 9 :1 bis 1:9 beträgt.

3. Zusammensetzung gemäß einem der Ansprüche 1 oder 2, **dadurch gekennzeichnet, dass** die wenigstens eine organische Säure und/oder deren Derivate ausgewählt ist aus der Gruppe bestehend aus Mono- und Polycarbonsäuren und deren Derivaten, bevorzugt ausgewählt aus der Gruppe bestehend aus Benzoesäure, Milchsäure, Salicylsäure, Sorbinsäure und Zitronensäure und deren Derivaten.

4. Zusammensetzung gemäß einem der Ansprüche 1 bis 3, **dadurch gekennzeichnet, dass** die wenigstens eine organische Säure und/oder deren Derivate Salicylsäure und/oder deren Derivate ist und in Form einer Zusammensetzung SA eingesetzt wird, welche wenigstens 10 Gew.-%, bevorzugt wenigstens 30 Gew.-%, besonders bevorzugt weigstens 50 Gew.-%, ganz besonders bevorzugt wenigstens 75 Gew.-%, bezogen auf das Gesamtgewicht der Zusammensetzung SA, Salicylsäure und/oder deren Derivate enthält.

5. Zusammensetzung gemäß Anspruch 4, **dadurch gekennzeichnet, dass** die Zusammensetzung SA ein Salix Alba-Extrakt ist.

6. Zusammensetzung gemäß Anspruch 5, **dadurch gekennzeichnet, dass** der Salix Alba-Extrakt durch Extraktion aus der Rinde der Silberweide gewonnen wird, bevorzugt durch Extraktion mit Wasser und/oder Ethanol.

**7.** Zusammensetzung gemäß einem der Ansprüche 1 bis 6, **dadurch gekennzeichnet, dass** wenigstens ein weiterer biozider Wirkstoff enthalten ist.

**8.** Zusammensetzung gemäß einem der Ansprüche 1 bis 7, **dadurch gekennzeichnet, dass** die Summe von DBDCB, der wenigstens einen organischen Säure und/oder deren Derivaten und des zusätzlich keinen oder wenigstens einen weiteren bioziden Wirkstoffs 1 bis 80 Gew.-%, bevorzugt 5 bis 60 Gew.-%, bezogen auf das Gesamtgewicht der Zusammensetzung, beträgt.

**9.** Zusammensetzung gemäß einem der Ansprüche 1 bis 8, **dadurch gekennzeichnet, dass** die Derivate der wenigstens einen organischen Säure Alkalimetallsalze sind, bevorzugt ausgewählt aus der Gruppe bestehend aus Natrium-, Kalium- und Lithiumsalzen.

**10.** Zusammensetzung gemäß einem der Ansprüche 1 bis 9, **dadurch gekennzeichnet, dass** wenigstens ein weiterer Zusatzstoff enthalten ist, bevorzugt ausgewählt aus der Gruppe bestehend aus grenzflächenaktive Stoffe, Benetzungsmittel, Emulgatoren, Dispergiermittel, Stabilisatoren, Haftmittel, Verdicker, Spreitmittel, organische Lösungsmittel, Duftstoffe, Farbmittel, Entstaubungsmittel, Puffersubstanzen, Puffersysteme, pH-Wert-Regulatoren, feste Trägerstoffe und Wasser, besonders bevorzugt wenigstens ein organisches Lösungsmittel, ganz besonders bevorzugt wenigstens ein Glykol.

**11.** Zusammensetzung gemäß 10, **dadurch gekennzeichnet, dass** 20 bis 99 Gew.%, bevorzugt 40 bis 95 Gew.-%, wenigstens eines weiteren Zusatzstoffes enthalten sind, bezogen auf das Gesamtgewicht der Zusammensetzung.

**12.** Verfahren zur Herstellung der Zusammensetzung gemäß einem der Ansprüche 1 bis 11, **dadurch gekennzeichnet, dass** man DBDCB und wenigstens eine organische Säure und/oder deren Derivate, gegebenenfalls unter Zugabe wenigstens eines weiteren bioziden Wirkstoffs und gegebenenfalls unter Zugabe wenigstens eines weiteren Zusatzstoffes, miteinander vermischt.

**13.** Verwendung der Zusammensetzung gemäß einem der Ansprüche 1 bis 11 zum Schutz von technischen Materialien vor Befall und/oder Zerstörung durch Mikroorganismen.

**14.** Technische Materialien, **dadurch gekennzeichnet, dass** sie mit einer Zusammensetzung gemäß einem der Ansprüche 1 bis 11 behandelt wurden.

**15.** Technische Materialien enthaltend eine Zusammensetzung gemäß einem der Ansprüche 1 bis 11.

Europäisches
Patentamt

European
Patent Office

Office européen
des brevets

**EUROPÄISCHER RECHERCHENBERICHT**

Nummer der Anmeldung

EP 15 18 2206

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | "Cussons Pure Senses Handwash", , 1. Juli 2004 (2004-07-01), Seiten 1-2, XP055221029, U.K. Gefunden im Internet: URL:www.gnpd.com [gefunden am 2015-10-15] | 1-3,7,8, 10-15 | INV. A01N37/34 A01N37/06 A01N37/10 A01N37/36 A01N37/40 A01N65/00 A01P1/00 |
| Y | * "Ingredients" * | 1-15 | |
| X | "Darrow Salicylic Acid Liquid Soap", , 1. Januar 2010 (2010-01-01), Seiten 1-3, XP055221043, U.K. Gefunden im Internet: URL:www.gnpd.com [gefunden am 2015-10-15] | 1-4,7,8, 10-15 | |
| Y | * "Ingredients" * | 1-15 | |
| X | "Cussons Hand Soap", , 1. August 2012 (2012-08-01), Seiten 1-2, XP055221053, U.K. Gefunden im Internet: URL:www.gnpd.com [gefunden am 2015-10-15] | 1-3,7-15 | RECHERCHIERTE SACHGEBIETE (IPC) A01N |
| Y | * "Ingredients" * | 1-15 | |

-/--

Der vorliegende Recherchenbericht wurde für alle Patentansprüche erstellt

| Recherchenort | Abschlußdatum der Recherche | Prüfer |
|---|---|---|
| München | 16. Oktober 2015 | Habermann, Jörg |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
    Dokument

EPO FORM 1503 03.82 (P04C03)

**Europäisches Patentamt**
**European Patent Office**
**Office européen des brevets**

# EUROPÄISCHER RECHERCHENBERICHT

Nummer der Anmeldung

EP 15 18 2206

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | "Zotos Rise n' Shine Volumizing Mousse", , 1. August 2002 (2002-08-01), Seiten 1-2, XP055221067, U.K. Gefunden im Internet: URL:www.gnpd.com [gefunden am 2015-10-15] | 1-8, 10-15 | |
| Y | * "Ingredients" * | 1-15 | |
| X | "Minerva Carex Moisture Rich Hand Wash", , 1. September 2007 (2007-09-01), Seiten 1-2, XP055221086, U.K. Gefunden im Internet: URL:www.gnpd.com [gefunden am 2015-10-15] | 1-3,7-15 | |
| Y | * "Ingredients" * | 1-15 | |
| X | L. KYNEMUND PEDERSEN ET AL: "Methyldibromoglutaronitrile in leave-on products elicits contact allergy at low concentration", BRITISH JOURNAL OF DERMATOLOGY, Bd. 151, Nr. 4, 1. Oktober 2004 (2004-10-01), Seiten 817-822, XP055221118, UK ISSN: 0007-0963, DOI: 10.1111/j.1365-2133.2004.06145.x | 1-3,7, 10-15 | RECHERCHIERTE SACHGEBIETE (IPC) |
| Y | * Tabelle 1 * * Seite 818, Spalte 2, Zeile 1 - Zeile 11 * | 1-15 | |

-/--

Der vorliegende Recherchenbericht wurde für alle Patentansprüche erstellt

| Recherchenort | Abschlußdatum der Recherche | Prüfer |
|---|---|---|
| München | 16. Oktober 2015 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 3 135 112 A1**

Europäisches
Patentamt

European
Patent Office

Office européen
des brevets

# EUROPÄISCHER RECHERCHENBERICHT

Nummer der Anmeldung

EP 15 18 2206

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 761 094 A1 (CALGON CORP [US]) 12. März 1997 (1997-03-12) | 1-3, 11-15 | |
| Y | * Tabellen 1-9 *<br>* Ansprüche 1-3 *<br>----- | 1-15 | |
| X | DE 196 27 931 A1 (CARE FULL COLOURS KOSMETIK PRO [DE]) 22. Januar 1998 (1998-01-22) | 1-3,7, 10-15 | |
| Y | * Rezeptur 2 *<br>----- | 1-15 | |
| X | EP 0 815 827 A2 (WELLA AG [DE]) 7. Januar 1998 (1998-01-07) | 1-3,7,8, 10-15 | |
| Y | * Beispiele 8, 15, 37 *<br>----- | 1-15 | |
| X | EP 0 682 103 A2 (R & C PRODUCTS PTY LTD [AU]) 15. November 1995 (1995-11-15) | 1-3,7, 9-15 | |
| Y | * Beispiele 1-20 *<br>----- | 1-15 | |
| X | WO 97/02381 A1 (R & C PRODUCTS PTY LTD [AU]) 23. Januar 1997 (1997-01-23) | 1-3,7, 9-15 | |
| Y | * Beispiele A-L *<br>----- | 1-15 | RECHERCHIERTE SACHGEBIETE (IPC) |
| X | WO 03/086335 A1 (PURAC BIOCHEM BV [NL]) 23. Oktober 2003 (2003-10-23) | 1-3,7-15 | |
| Y | * Zusammensetzungen 1, 2 *<br>----- | 1-15 | |
| X | DATABASE WPI Week 201361 Thomson Scientific, London, GB; AN 2013-J49946 XP002746630, -& CN 102 948 417 A (JIANGXI ZHENGBANG BIOLOGY CHEM CO LTD) 6. März 2013 (2013-03-06) * Zusammenfassung * * Beispiele 1, 3, 5 *<br>----- | 1-3,7,8, 10-12 | |

Der vorliegende Recherchenbericht wurde für alle Patentansprüche erstellt

| Recherchenort | Abschlußdatum der Recherche | Prüfer |
|---|---|---|
| München | 16. Oktober 2015 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 2206

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2015

| Im Recherchenbericht angeführtes Patentdokument | Datum der Veröffentlichung | Mitglied(er) der Patentfamilie | Datum der Veröffentlichung |
|---|---|---|---|
| EP 0761094 A1 | 12-03-1997 | BR 9603624 A | 19-05-1998 |
| | | CN 1151245 A | 11-06-1997 |
| | | DE 69600829 D1 | 26-11-1998 |
| | | DE 69600829 T2 | 02-06-1999 |
| | | EP 0761094 A1 | 12-03-1997 |
| | | ES 2122763 T3 | 16-12-1998 |
| | | JP H09124414 A | 13-05-1997 |
| | | KR 100455967 B1 | 29-12-2004 |
| | | US 5641808 A | 24-06-1997 |
| DE 19627931 A1 | 22-01-1998 | KEINE | |
| EP 0815827 A2 | 07-01-1998 | AR 007376 A1 | 27-10-1999 |
| | | BR 9703795 A | 01-09-1998 |
| | | DE 19625982 A1 | 02-01-1998 |
| | | EP 0815827 A2 | 07-01-1998 |
| | | ES 2114842 T1 | 16-06-1998 |
| | | JP H1045545 A | 17-02-1998 |
| | | US 6068835 A | 30-05-2000 |
| EP 0682103 A2 | 15-11-1995 | AU 6306594 A | 23-11-1995 |
| | | BR 9502024 A | 27-02-1996 |
| | | CA 2149293 A1 | 13-11-1995 |
| | | EP 0682103 A2 | 15-11-1995 |
| | | ZA 9503884 A | 18-01-1996 |
| WO 9702381 A1 | 23-01-1997 | AR 002672 A1 | 25-03-1998 |
| | | BR 9609322 A | 20-07-1999 |
| | | CA 2225633 A1 | 23-01-1997 |
| | | EP 0836657 A1 | 22-04-1998 |
| | | GB 2302877 A | 05-02-1997 |
| | | NZ 311585 A | 29-07-1999 |
| | | US 5695677 A | 09-12-1997 |
| | | WO 9702381 A1 | 23-01-1997 |
| | | ZA 9605638 A | 24-01-1997 |
| WO 03086335 A1 | 23-10-2003 | KEINE | |
| CN 102948417 A | 06-03-2013 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1621076 B1
- EP 0098410 B1
- US 5034405 A

**In der Beschreibung aufgeführte Nicht-Patentliteratur**

- **F.C. KULL ; P.C. ELISMAN ; H.D. SYLWESTROWICZ ; P.K. MAYER.** *Appl. Microbiol.,* 1961, vol. 9, 538